# EUROPEAN PATENT SPECIFICATION

(11) **EP 2 489 861 B1**
(45) Date of publication and mention of the grant of the patent: **05.04.2017**
(21) Application number: 10823309.9
(22) Date of filing: 05.10.2010
(51) Int. Cl.: F02D 13/02, F02B 37/00, F02B 37/10, F01N 5/02, F02B 41/04, F02B 37/013

(54) **MILLER CYCLE ENGINE**
MILLER-MOTOR
MOTEUR À CYCLE DE MILLER

(30) Priority: 16.10.2009 JP 2009239461
(43) Date of publication of application: 22.08.2012
(73) Proprietor: Mitsubishi Heavy Industries, Ltd., Tokyo 108-8215 (JP)
(72) Inventor: ISHIDA, Michiyasu, Tokyo 108-8215 (JP); ODA, Kenjiro, Tokyo 108-8215 (JP); NAMEKAWA, Shoji, Tokyo 108-8215 (JP)
(74) Representative: Hoffmann Eitle
(86) International application number: PCT/JP2010/067423
(87) International publication number: WO 2011/046041

(56) References cited:
- DE-A1- 10 159 801
- DE-B1- 2 838 490
- GB-A- 712 613
- JP-A- 2 033 413
- JP-A- S60 212 621
- JP-A- 2003 314 315
- JP-A- 2004 183 511
- JP-A- 2007 239 566
- JP-A- 2007 518 019
- JP-A- 2008 025 551
- JP-U- 60 122 533
- US-A1- 2005 229 900

## Description

### TECHNICAL FIELD

This invention relates to a miller cycle engine which is configured to close an intake valve at a timing earlier or later than the bottom dead center to make a compression ratio lower than an expansion ratio, and in particular relates to a technique to improve the thermal efficiency of the miller cycle by increasing boost pressure.

### BACKGROUND ART

A miller cycle engine is effective for avoiding occurrence of knocking and for realizing high thermal efficiency by closing an intake valve at a timing earlier or later than the bottom dead center to keep a compression ratio of the engine lower than an expansion ratio. A miller cycle engine is also known as being able to realize a high expansion ratio and to utilize combustion energy more efficiently as torque by sufficiently expanding combustion gas. Miller cycle engines are disclosed in DE 101 59 801 A1 and GB 712 613.

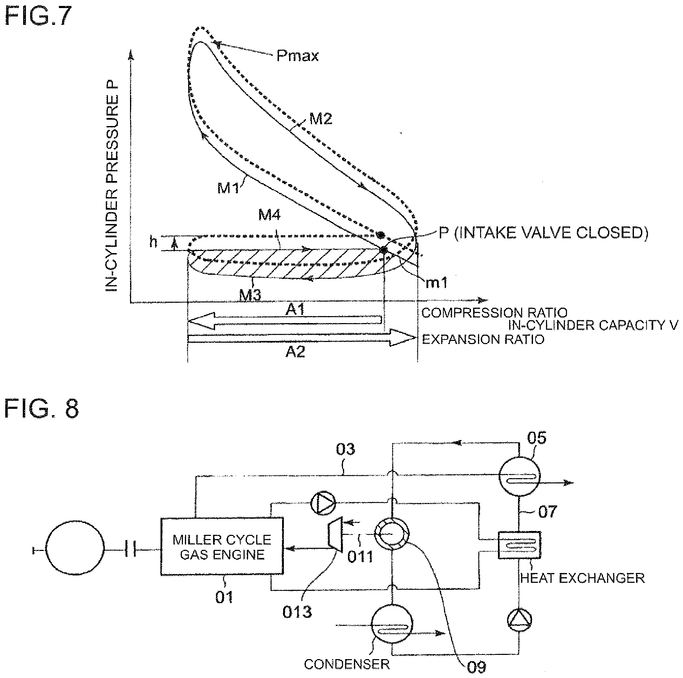

In FIG. 7, the solid line indicates a P-V graph, which is a P-V graph of an internal combustion engine provided with a turbocharger. The P-V graph indicates an early intake-valve closing miller cycle based on an Otto cycle.

The shown miller cycle is composed of a compression stroke (M1), a combustion/expansion stroke (M2), an exhaust stroke (M3), and an intake stroke (M4). The intake valve is closed at an earlier timing than the bottom dead center at a point P in the intake stroke, whereby air expands from the point P along a line m1, is compressed while returning again to the line m1, and then varies from the point P along a line of the compression stroke (M1).

As a result, as shown in a lower part of FIG. 7, a piston stroke in a combustion chamber volume used in calculation of a compression ratio is indicated by A1, and a piston stroke in a combustion chamber volume used in calculation of an expansion ratio is indicated by A2, which reveals that the compression ratio can be made smaller than the expansion ratio.

When improvement in thermal efficiency is taken into consideration for the current early intake valve closing miller cycle indicated by the solid line in FIG. 7, a bag-shaped closed loop (the shaded area in FIG. 7) circling clockwise from M3 to M4 and formed by the intake stroke (M4) and the exhaust stroke (M3) as a result of intake pressurization by the turbocharger corresponds to pumping work representing a positive workload for the engine. Accordingly, it is effective to improve this pumping work (to enlarge the shaded area of FIG. 7) for improvement of the thermal efficiency.

However, if it is tried to shift up the intake stroke (M4) by increasing the turbo pressure in order to improve the pumping work, exhaust pressure of a drive source for the turbocharger must be increased. Therefore, the resulting pumping work is not improved significantly in comparison with that before increasing the turbo pressure (the shaded area in FIG. 7 only shifts up by h).

In addition, merely raising the turbo pressure causes the exhaust pressure to rise as well, and the entire P-V graph shifts up as shown in FIG. 7 (the dotted line in FIG. 7), whereby the maximum in-cylinder pressure (Pmax) is also raised. As a result, the maximum in-cylinder pressure (Pmax) may exceed the allowable maximum pressure, which will adversely affect the mechanical strength and thermal load of the engine body.

Known inventions relating to miller cycle engines include Patent Document 1 (Japanese Patent Application Laid-Open No. H7-305606) and Patent Document 2 (Japanese Patent Application Laid-Open No. 2000-220480).

A configuration disclosed in Patent Document 1 is shown in FIG. 8. This invention is intended to increase the engine output by the shown configuration in which an exhaust gas supply pipe 03 extending from a miller cycle gas engine 01 is connected to a steam generator 05, and a steam turbine 09 is provided on a working fluid circulation piping 07 connected to the steam generator 05. An output shaft 011 of the steam turbine 09 is provided with a turbocharger 013 for supplying compressed air to the miller cycle gas engine 01. The turbocharger 013 is driven by using combustion exhaust gas from the miller cycle gas engine 01 as heat source.

Patent Document 2 discloses a miller cycle engine having two turbocharger arranged in series. The invention is intended to realize high energy efficiency while preventing knocking, by employing an exhaust gas recycle system (EGR) for this miller cycle engine.

Patent Document 1: Japanese Patent Application Laid-Open No. H7-305606
Patent Document 2: Japanese Patent Application Laid-Open No. 2000-220480

However, neither of the aforementioned Patent Documents 1 and 2 discloses a technique for improving the thermal efficiency by increasing pumping work formed by an exhaust stroke and an intake stroke in a miller cycle engine.

Furthermore, as already described with reference to FIG. 7, improvement in thermal efficiency by the pumping work cannot be obtained by merely raising the turbo pressure. Moreover, this may induce a problem that the rising of the maximum in-cylinder pressure (Pmax) causes an adverse effect on mechanical strength and thermal load of the engine body.

Additionally, DE 10 159 801 A1 discloses a combustion engine with at least one charging device, which is powered of the exhaust gas stream of the combustion engine, and comprising a camshaft adjustable according to the miller method, wherein a further compressor stage is provided in series or in parallel with the charging device and is not powered by the exhaust gas stream of the combustion engine, wherein the charging pressure is increased at low engine revolutions by activating the further compressor stage.

Moreover, GB 712613 A discloses an internal combustion engine comprising a supercharger driven by exhaust gases from the engine, so as to supply charging air at a ration pressure dependent on the load of the engine, means for cooling the charging air, and automatic control means for varying the compression ratio in the cylinders inversely in accordance with the load or a factor which varies directly with the load.

### DISCLOSURE OF THE INVENTION

This invention has been made in view of the aforementioned problems, and an object of the invention is to provide a miller cycle engine which improves the pumping work formed by an intake stroke and an exhaust stroke by increasing only boost pressure or by increasing the boost pressure more than increase in exhaust pressure, and also improves the reliability of mechanical strength and thermal load of the engine body by maintaining the maximum in-cylinder pressure at substantially the same level as that before increasing of the boost pressure.

In order to solve the problems described above, this invention provides a miller cycle engine which is provided with a turbocharger for increasing boost pressure and is configured to close an intake valve at a timing earlier or later than the bottom dead center to make a compression ratio lower than an expansion ratio. The miller cycle engine includes: an intake valve variable unit configured to control a timing to open or close the intake valve; a boost pressure adding device for further adding an additional boost pressure to the boost pressure increased by the turbocharger so as to increase only the boost pressure without involving increase in exhaust pressure, or so as to increase the boost pressure with involving increase in exhaust pressure, the additional boost pressure being larger than the increase in the exhaust pressure; and a valve closing timing control unit configured to advance more the timing to close the intake valve as the additional boost pressure added by the boost pressure adding device becomes higher so as to maintain the boost pressure at substantially the same level as a maximum in-cylinder pressure before adding the additional boost pressure, wherein the valve closing timing control unit is configured to detect a total boost pressure of the boost pressure provided by the turbocharger and the additional boost pressure added by the boost pressure adding device by means of a boost pressure sensor, and the valve closing timing control unit has a valve closing timing control map in which a valve closing timing for the intake valve is set in accordance with the boost pressure detected by the boost pressure sensor, and wherein a relationship between the total boost pressure and an intake valve closing timing is preset in the valve closing timing control map such that a compression stroke is performed along the line of a compression stroke before the additional boost pressure is applied.

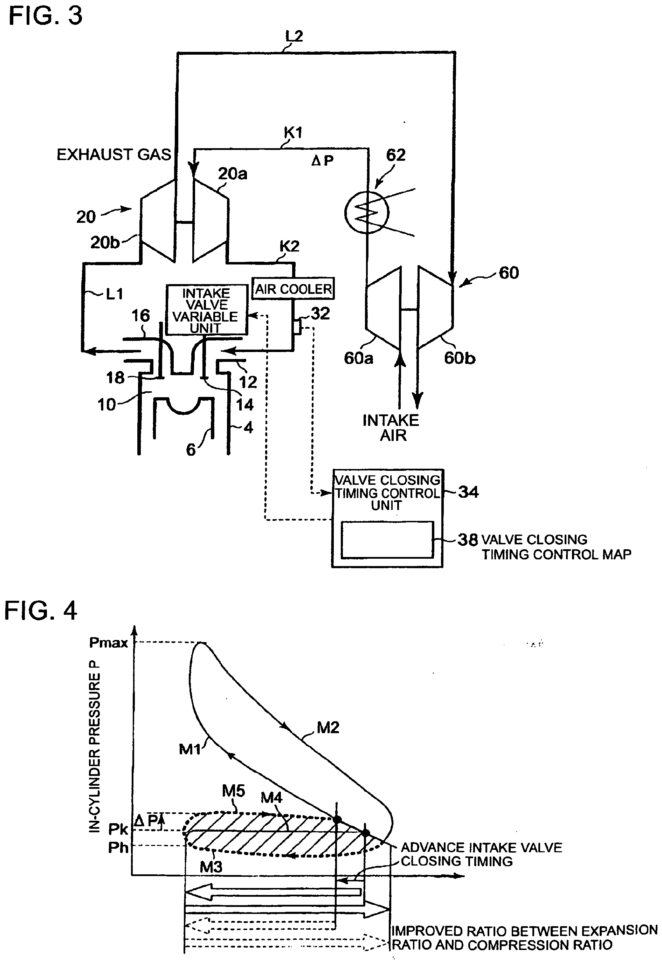

According to this invention, the boost pressure adding device adds an additional boost pressure to increase only the boost pressure, or if increase in exhaust pressure is involved, adds an additional boost pressure that is larger than the increase in the exhaust pressure, so that pumping work formed by an intake stroke and an exhaust stroke is improved (pumping work is improved by enlarging the shaded area shown in FIG. 4). Thus, the thermal efficiency of the miller cycle engine can be improved.

Further, the valve closing timing control unit changes the timing to close the intake valve according to the additional boost pressure added by the boost pressure adding device, and advances more the intake valve closing timing as the additional boost pressure becomes higher, so that the boost pressure is maintained at substantially the same level as a maximum in-cylinder pressure before addition of the additional boost pressure (maximum in-cylinder pressure (Pmax) shown in FIG. 4). Thus, any harmful effects on mechanical strength and thermal load of the engine body due to the increase in maximum in-cylinder pressure can be avoided and the reliability can be improved.

It is preferable, in the invention, that the valve closing timing control unit detects a total boost pressure of the boost pressure generated by the turbocharger and the additional boost pressure added by the boost pressure adding device by means of a boost pressure sensor, and controls the timing to close the intake valve based on the detected value.

In this manner, the boost pressure of supply air flowing into the engine is directly detected, and the intake valve closing timing is controlled based on this detected value. In other words, the intake valve closing timing is controlled based on a detected value of boost pressure reflecting variation in ambient conditions including atmospheric temperature, atmospheric pressure, and humidity, which enables accurate control of the intake valve closing timing in accordance with the variation of ambient conditions. For example, when the ambient temperature becomes higher, the boost pressure is decreased due to decreased air density, and the intake valve closing timing is controlled based on this decreased pressure value. Even if an additional boost pressure is accordingly applied, and moreover the ambient conditions vary significantly, the maximum in-cylinder pressure can be maintained with high precision at the same level as the maximum in-cylinder pressure before the addition of the additional boost pressure.

It is also preferable, in the invention, that the boost pressure adding device is configured to use regenerative energy from the engine. The use of regenerative energy makes it possible to increase only the boost pressure while preventing increase in exhaust pressure of the engine, or to increase the boost pressure more than the increase in the exhaust pressure.

Specifically, the regenerative energy is steam generated by using exhaust gas heat of the engine, and the additional boost pressure is generated upstream of the turbocharger by a compressor unit of a steam turbine driven by the steam.

Thus, steam is generated by using exhaust gas heat to drive the steam turbine, and supply air is supplied to the turbocharger after being preliminarily pressurized by the compressor unit of the steam turbine, whereby the boost pressure can be increased without involving increase in the exhaust pressure, and pumping work formed by an exhaust stroke and an intake stroke in a miller cycle can be increased.

In another example, the turbocharger may be a hybrid turbocharger having a generator incorporated therein, the regenerative energy may be electric power generated by utilizing the exhaust gas, and the additional boost pressure may be generated by driving, with the electric power, a supply air blower provided on an air supply channel.

When the turbocharger is formed by a hybrid turbocharger having a generator incorporated therein, electric power can be generated by utilizing flow of exhaust gas to drive the supply air blower provided on the air supply channel, whereby the boost pressure can be increased without involving increase in the exhaust pressure, or even if increase in the exhaust pressure is involved, the boost pressure can be increased more than the increase in the exhaust pressure. As result, pumping work formed by an exhaust stroke and an intake stroke in a miller cycle can be increased.

In still another example, a pre-turbocharger driven by utilizing an exhaust gas flow from the engine as the regenerative energy may be provided on an upstream side of the turbocharger, and the additional boost pressure may be generated by the pre-turbocharger on the upstream side of the turbocharger. Although this case involves increase in the exhaust pressure, turbocharging characteristics of the pre-turbocharger can be set such that the additional boost pressure is larger than increase in the exhaust pressure that is increased for driving the pre-turbocharger so that the boost pressure is increased more than the increase in the exhaust pressure. Thus, the pumping work formed by an intake stroke and an exhaust stroke in a miller cycle can be improved.

This invention provides a miller cycle engine which is provided with a turbocharger for increasing boost pressure and includes: an intake valve variable unit which controls a timing to open or close the intake valve; a boost pressure adding device for further adding an additional boost pressure to the boost pressure increased by the turbocharger so as to increase only the boost pressure, or if increase in exhaust pressure is involved, so as to increase the boost pressure such that the additional boost pressure is larger than the increase in the exhaust pressure; and a valve closing timing control unit which advances more the timing to close the intake valve as the additional boost pressure added by the boost pressure adding device becomes higher so as to maintain the boost pressure at substantially the same level as a maximum in-cylinder pressure before adding the additional boost pressure. According to this configuration, an additional boost pressure can be added to only the boost pressure, or it can be added to the boost pressure such that the additional boost pressure is larger than the increase in the exhaust pressure. Thus, pumping work formed by an intake stroke and an exhaust stroke is increased, resulting in improvement of thermal efficiency.

Moreover, a maximum in-cylinder pressure can be maintained at substantially the same level as that before adding the additional boost pressure. Thus, a miller cycle engine having an improved reliability can be provided, avoiding possible problems relating to mechanical strength and thermal load of the engine body.

### BRIEF DESCRIPTION OF THE DRAWINGS

FIG. 1 is a general configuration diagram of a first embodiment relating to a miller cycle engine according to this invention;
FIG. 2 is a general configuration diagram of a second embodiment;
FIG. 3 is a general configuration diagram of a third embodiment;
FIG. 4 is a P-V diagram for explaining a miller cycle according to the invention;
FIG. 5 is a P-V diagram for explaining a miller cycle according to the invention;
FIG. 6 is an explanatory diagram illustrating a relationship among boost pressure, exhaust pressure, and energy efficiency, FIG. 6 (a) illustrating a relationship between boost pressure and exhaust pressure, and FIG. 6 (b) illustrating energy efficiency in relation to the relationship between boost pressure and exhaust pressure shown in FIG. 6(a);
FIG. 7 is a P-V diagram for explaining a conventional miller cycle; and
FIG. 8 is an explanatory diagram of a conventional technique.

### BEST MODE FOR CARRYING OUT THE INVENTION

### First Embodiment

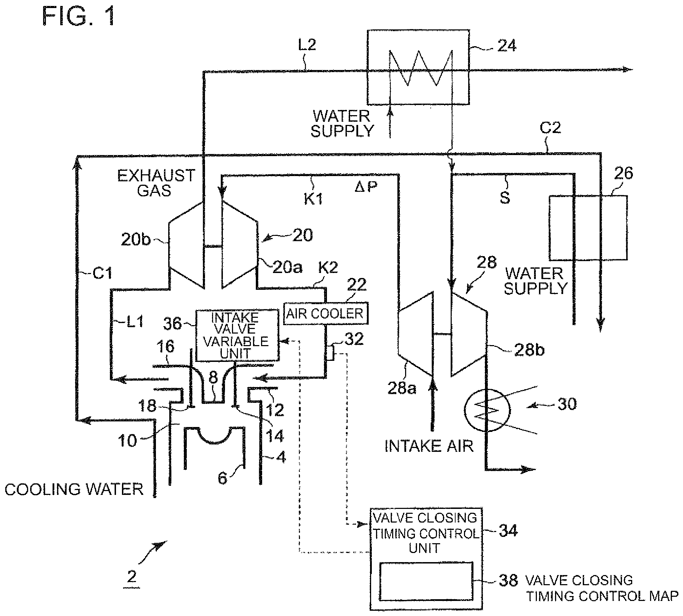

FIG. 1 is a general configuration diagram of a miller cycle engine (hereafter, simply referred to as the engine) 2 according to a first embodiment of this invention.

Although, in FIG. 1, the engine 2 is shown as a four cycle gas engine for an illustrative purpose, the engine is not limited to a gas engine.

There are provided in a cylinder 4 of the engine body, a piston 6 which is fitted reciprocally and slidably in the cylinder, and a crank shaft which converts reciprocating motion of the piston 6 into rotation via a connecting rod (not shown). The engine body further has a combustion chamber 10 defined between the upper face of the piston 6 and an inner surface of a cylinder head 8, an intake port 12 connected to the combustion chamber 10, and an intake valve 14 for opening and closing the intake port 12. The engine body further has an exhaust port 16 connected to the combustion chamber 10 and an exhaust valve 18 for opening and closing the exhaust port 16.

While a fuel gas supply device and an ignition device are not shown in the drawing, fuel gas is supplied to the combustion chamber 10 through the intake port 12 and the intake valve 14, after being premixed with compressed air supplied from a compressor unit 20a of a turbocharger (exhaust turbocharger) 20, and ignited by the ignition device.

Compressed air is supplied to the intake port 12 from the compressor unit 20a of the turbocharger 20 through an air supply channel K2 having an air cooler 22 provided thereon. The exhaust port 16 is connected to a turbine unit 20b of the turbocharger 20 through an exhaust path L1.

Exhaust gas, which has passed through the turbine unit 20b, is introduced into a first heat exchanger 24(steam generator) through an exhaust path L2, and the exhaust gas heats externally-supplied water to generate steam in this first heat exchanger (steam generator) 24. Engine cooling water supplied through a cooling water pipe C1 is introduced into a second heat exchanger (steam generator) 26 through a cooling water pipe C2, and heats externally-supplied water to generate steam.

The steam generated in the first heat exchanger 24 and the second heat exchanger 26 is supplied to a turbine unit 28b of a steam turbine (boost pressure adding device) 28 through a steam pipe S, and drives a compressor unit 28a arranged concentrically with the turbine unit 28b to pressurize supply air. A two-stage turbocharging system is provided, consisting of the compressor unit 28a of the steam turbine 28 and the compressor unit 20a of the turbocharger 20, so that the pressurized supply air is further supplied to and pressurized in the compressor unit 20a of the turbocharger 20.

In this manner, steam is generated by utilizing exhaust gas heat to drive the steam turbine 28, and supply air is preliminarily pressurized by the compressor unit 28a of the steam turbine 28 and then supplied to the turbocharger 20, whereby boost pressure can be increased without raising exhaust pressure.

The steam passing through the turbine unit 28b of the steam turbine 28 is cooled and condensed by a condenser 30, and is again, and supplied as water to the first heat exchanger 24 and the second heat exchanger 26.

A boost pressure sensor 32 is arranged in the vicinity of the intake port 12 of the air supply channel K2, so that boost pressure of air flowing into the combustion chamber 10 is measured. This means that, pressure in the air supply channel K2 at the start of an intake stroke is input to a valve closing timing control unit 34 as a detection signal. The valve closing timing control unit 34 is configured to calculate an optimum timing for closing the intake valve 14 based on the detected pressure value, and to output a control signal to an intake valve variable unit 36.

This valve closing timing control unit 34 has a valve closing timing control map 38 in which a valve closing timing for the intake valve 14 is set in accordance with the boost pressure detected by the boost pressure sensor 32.

As shown in FIG. 4, an additional boost pressure ΔP added to the boost pressure by the steam turbine 28 serving as a boost pressure adding device is added to exhaust pressure Ph during an exhaust stroke (M3) and boost pressure Pk during an intake stroke (M4) formed by the turbocharger 20, whereby pressure during an intake stroke (M5) is obtained.

Accordingly, a total boost pressure (Pk+ΔP) of the boost pressure Pk by the turbocharger 20 and the additional boost pressure ΔP by the steam turbine 28 is detected by the boost pressure sensor 32, and the valve closing timing for the intake valve 14 is controlled based on the detected value by the boost pressure sensor 32.

There is preset, in the valve closing timing control map 38, a relationship between total boost pressure (Pk+ΔP) and intake valve closing timing. The compression stroke start position on the line indicating the compression stroke (M1) is changed according to a magnitude of the total boost pressure (Pk+ΔP), such that the compression stroke is performed along the line of the compression stroke (M1) in FIG. 4, that is, such that a maximum in-cylinder pressure (Pmax) is kept at substantially the same level as that before the additional boost pressure is applied by the steam turbine 28. The timing to close the intake valve 14 is advanced or retarded in accordance with the start position.

In other words, there is preset, in the valve closing timing control map 38, a relationship between the total boost pressure (Pk+ΔP) and the timing to close the intake valve 14 such that the compression stroke is started along the line of the compression stroke (M1) before the additional boost pressure is applied.

Further, since the boost pressure of supply air flowing into the combustion chamber 10 is directly detected by the boost pressure sensor 32 and the timing to close the intake valve 14 is controlled based on the detected value, in other words, since the effect of variation in the ambient conditions including atmospheric temperature, atmospheric pressure, and humidity is reflected on the boost pressure, the timing to open the intake valve can be accurately corrected, and thus the maximum in-cylinder pressure (Pmax) can be kept constant regardless of variation in the ambient conditions.

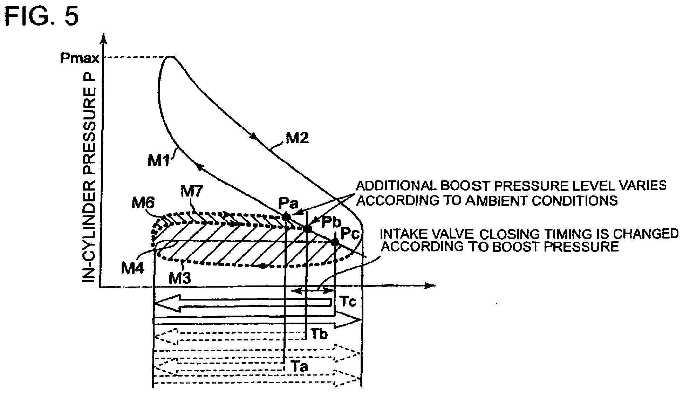

As shown in FIG. 5, for example, when the boost pressure is decreased due to increase in ambient temperature and reduction in air density, and an intake stroke (M6) is performed with the total boost pressure (Pk+ΔP)=Pb, the intake valve closing timing is set to Tb. On the other hand, when the ambient temperature is reduced, the air density is increased, and an intake stroke (M7) is performed with the total boost pressure (Pk+ΔP)=Pa, the intake valve closing timing is set to Ta. It should be understood that Pc and Tc indicate a case in which no additional pressure is added by the steam turbine 28.

Optimum valve closing timing control is performed for the intake valve 14 based on a preset total boost pressure (Pk+ΔP). Therefore, even if an additional boost pressure is applied, or even if there occurs a change in the ambient conditions, the additional boost pressure follows the line of the compression stroke (M1) before the application of the additional boost pressure. Therefore, the maximum in-cylinder pressure (Pmax) can be kept constant with high precision.

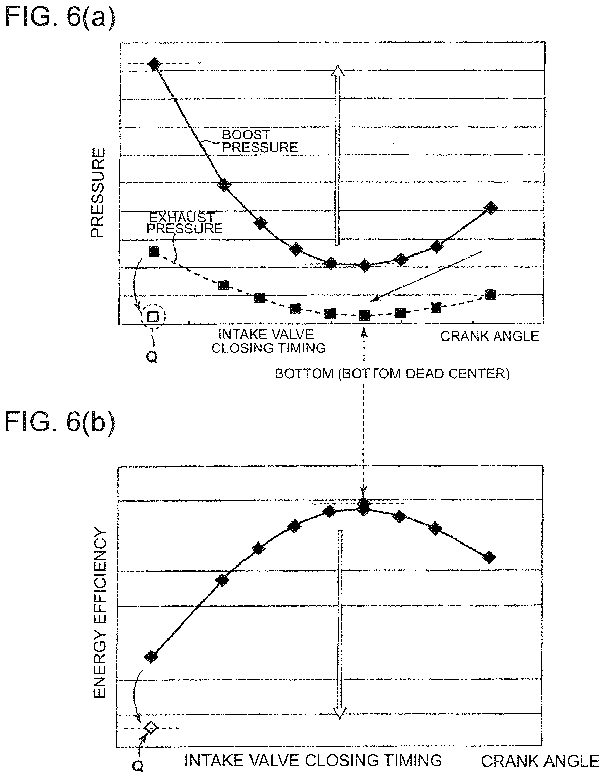

Description will be made, with reference to FIGs. 6(a) and 5(b), on pumping work when only the boost pressure is increased without increasing the exhaust pressure, or when the boost pressure is increased more than the increase in the exhaust pressure.

FIG. 6 represents a result of simulation calculation. FIG. 6(a) illustrates how the boost pressure and the exhaust pressure vary under a certain turbocharging state by plotting crank angles on the horizontal axis, and FIG. 6(b) illustrates energy efficiency.

In FIG. 6(a), the bottom position of a characteristic curve substantially indicates the bottom dead center, and a leftward direction from the position of the bottom dead center corresponds to a direction in which the valve closing timing of the intake valve 14 is advanced.

As shown in FIG. 6(a), calculation reveals that as the valve closing timing is advanced while the throttling of the turbocharger is kept constant, the efficiency of the turbocharger is improved and a difference between the boost pressure and the exhaust pressure is increased. This means that the difference in pressure between the exhaust stroke (M3) and the intake stroke (M5) shown in FIG. 4 is increased and the amount of pumping work can be increased. However, since there is a limit to improvement of the turbocharger efficiency, the increase of difference pressure as shown in FIG. 6 (a) cannot necessarily be obtained. However, as the result of the calculation, the tendency as described above was acknowledged.

In FIG. 6 (b) illustrating characteristic of energy efficiency, crank angles are plotted on the horizontal axis like in FIG. 6 (a), and a leftward direction from the position of the bottom dead center indicates a direction to which the valve closing timing of the intake valve 14 is advanced. It can be seen that as the valve closing timing is advanced, the fuel consumption rate drops down.

Moreover, when it is assumed, for the purpose of calculation, that the exhaust pressure is not increased at all, a large drop in the energy efficiency is acknowledged, being located at the point Q in FIGs. 6(a) and 6(b).

According to the first embodiment described above, it is made possible to increase only the boost pressure while preventing the increasing of the exhaust pressure by using steam generated by utilizing exhaust heat and heat of heated engine cooling water as regenerative energy from the engine body.

In this manner, only the boost pressure can be increased by adding an additional boost pressure by the steam turbine 28 utilizing exhaust heat and heated engine cooling water, whereby the pumping work formed by the intake stroke (M5) and the exhaust stroke (M3) (the shaded area in FIG. 4) can be improved, and hence the thermal efficiency of the miller cycle engine can be improved.

Although, in the first embodiment, steam is generated by both the first heat exchanger (steam generator) 24 and the second heat exchanger (steam generator) 26, either one of them can be used. In other words, either the exhaust heat or the heated engine cooling water can be used to generate steam.

Further, the valve closing timing control unit 34 changes the timing to close the intake valve 14 in accordance with an additional boost pressure added by the steam turbine 28, and the valve closing timing of the intake valve 14 is advanced as the additional boost pressure becomes higher so as to keep the boost pressure at substantially the same level as a maximum in-cylinder pressure before adding the additional boost pressure (maximum in-cylinder pressure (Pmax) in FIG. 4). Therefore, it is made possible to avoid any adverse effects on the mechanical strength and thermal load of the engine body possibly caused by the increase of the maximum in-cylinder pressure, and hence the reliability can be improved.

### Second Embodiment

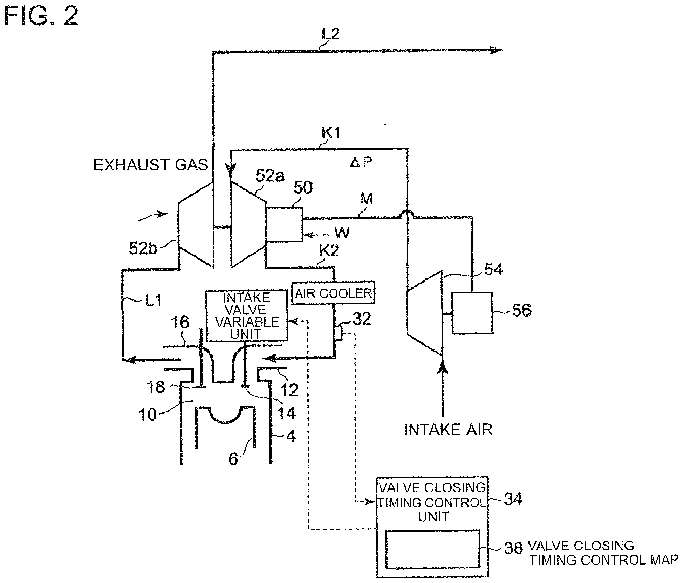

A second embodiment of the invention will be described with reference to FIG. 2.

The second embodiment uses electric power generated by utilizing exhaust gas as regenerative energy of an engine.

As shown in FIG. 2, a turbocharger is formed by a hybrid turbocharger 52 having a generator motor 50 incorporated therein. An additional boost pressure is generated by driving a supply air blower 54 provided on an air supply channel K1 upstream of the hybrid turbocharger 52 with use of electric power generated by utilizing exhaust gas.

The hybrid turbocharger 52 is composed of a compressor unit 52a and a turbine unit 52b. The compressor unit 52a has the generator motor 50 incorporated therein. Electric power is generated by rotation of the compressor unit 52a, and the generated power is supplied to a blower motor 56 for driving a supply air blower 54 through a power supply line M. Control of rotation speed of the blower motor 56 is performed with use of an inverter or a speed increasing/decreasing gear (not shown).

Alternatively, electric power W may be externally supplied to the generator motor 50 so as to increase the speed of the compressor unit 52a itself of the hybrid turbocharger 52 so that the additional boost pressure is generated.

According to the second embodiment, the boost pressure adding device is composed of the hybrid turbocharger 52 and the supply air blower 54. Therefore, unlike the first embodiment, the boost pressure adding device can be obtained easily without the need of using a steam generator for generating steam and without increasing the size of the device.

Further, according to the configuration of the hybrid turbocharger 52 having the generator motor 50 incorporated therein, electric power is generated by utilizing flow of exhaust gas to drive the supply air blower 54 provided on the air supply channel K1. Therefore, the boost pressure can be increased without involving increase in exhaust pressure, and even if the increase in the exhaust pressure is involved, the boost pressure can be increased more than the increase in the exhaust pressure. Accordingly, the same function effects as those of the first embodiment can be obtained.

### Third Embodiment

A third embodiment of the invention will be described with reference to FIG. 3. In this third embodiment, a pre-turbocharger 60 is driven by using exhaust gas as regenerative energy of an engine. This means that the pre-turbocharger 60 is provided in place of the steam turbine 28 described in the first embodiment.

As shown in FIG. 3, exhaust gas, which has passed through the turbine unit 20b of the turbocharger 20, flows into a turbine unit 60b of the pre-turbocharger 60 to drive a compressor unit 60a of the pre-turbocharger 60 provided coaxially with the turbine unit 60b and pressurize supply air. The compressor unit 60a of the pre-turbocharger 60 and the compressor unit 20a of the turbocharger 20 forms a two-stage turbocharging system so that the supply air pressurized by the compressor unit 60a is supplied to the compressor unit 20a of the turbocharger 20 to be further pressurized thereby.

An air cooler 62 is provided on an air supply channel K1 connecting the compressor unit 60a of the pre-turbocharger 60 and the compressor unit 20a of the turbocharger 20.

According to the third embodiment, the boost pressure adding device is formed by the pre-turbocharger 60. Therefore, unlike the first embodiment, the boost pressure adding device can be obtained easily without using the steam generator for generating steam and without increase in size.

In the third embodiment, the exhaust pressure Ph during the exhaust stroke (M3) shown in FIG. 4 is formed by the turbocharger 20 and the pre-turbocharger 60, and therefore the exhaust pressure rises to Ph+ΔPh, whereas an additional boost pressure ΔP generated by the pre-turbocharger 60 serving as the boost pressure adding device is added to the boost pressure Pk during the intake stroke (M4) to define the pressure during the intake stroke (M5). If the additional boost pressure ΔP in the boost pressure is larger than the increase amount ΔPh in the exhaust pressure which is increased for driving the pre-turbocharger 60 (if turbocharging characteristic of the pre-turbocharger 60 is set as such), the difference in pressure between the exhaust stroke (M3) and the intake stroke (M5) is increased in totality, and thus the amount of pumping work can be increased.

This means that the amount of pumping work can be increased by increasing the boost pressure by adding the additional boost pressure ΔP that is larger than the increase amount ΔPh of the exhaust pressure, instead of increasing only the boost pressure without increasing the exhaust pressure. The other functional effects of the third embodiment are the same as those of the first embodiment.

### INDUSTRIAL APPLICABILITY

In a miller cycle engine provided with a turbocharger according to this invention, pumping work formed by an intake stroke and an exhaust stroke can be improved by increasing only boost pressure or by increasing the boost pressure more than increase in exhaust pressure, while the reliability of mechanical strength and thermal load of the engine body can be improved by keeping a maximum in-cylinder pressure at substantially the same level as that before the increase of the boost pressure. Therefore, this invention is suitable for use in miller cycle engines.

## Claims

1. A miller cycle engine which is provided with a turbocharger for increasing boost pressure and is configured to close an intake valve (14) at a timing earlier or later than the bottom dead center to make a compression ratio lower than an expansion ratio, the miller cycle engine (2) comprising:
an intake valve variable unit (36) configured to control a timing to open or close the intake valve (14);
a boost pressure adding device (28, 54, 60) for further adding an additional boost pressure (ΔP) to the boost pressure increased by the turbocharger (20) so as to increase only the boost pressure without involving increase in exhaust pressure, or so as to increase the boost pressure with involving increase in exhaust pressure, the additional boost pressure (ΔP) being larger than the increase in the exhaust pressure;
**characterized in that** the miller cycle engine (2) further comprises:
a valve closing timing control unit (34) configured to advance more the timing to close the intake valve (14) as the additional boost pressure (ΔP) added by the boost pressure adding device (28, 54, 60) becomes higher so as to maintain the boost pressure at substantially the same level as a maximum in-cylinder pressure before adding the additional boost pressure (ΔP),
wherein the valve closing timing control unit (34) is configured to detect a total boost pressure of the boost pressure provided by the turbocharger (20) and the additional boost pressure (ΔP) added by the boost pressure adding device (28, 54, 60) by means of a boost pressure sensor (32), and the valve closing timing control unit (34) has a valve closing timing control map (38) in which a valve closing timing for the intake valve (14) is set in accordance with the boost pressure detected by the boost pressure sensor (32), wherein
a relationship between the total boost pressure and an intake valve closing timing is preset in the valve closing timing control map (38) such that a compression stroke is performed along the line of a compression stroke (M1) before the additional boost pressure is applied.

2. The miller cycle engine according to claim 1, wherein the boost pressure adding device (28) is configured to use regenerative energy from the engine (2).

3. The miller cycle engine according to claim 2, wherein the regenerative energy is steam that is generated by utilizing heat of exhaust gas from the engine (2), and the additional boost pressure (ΔP) is generated on the upstream side of the turbocharger (20) by a compressor unit (28a) of a steam turbine (28) driven by the steam.

4. The miller cycle engine according to claim 2, wherein the turbocharger (20) is a hybrid turbocharger (52) having a generator (50) incorporated therein, the regenerative energy is electric power generated by utilizing the exhaust gas, and the additional boost pressure (ΔP) is generated by driving, with the electric power, a supply air blower (54) provided on an air supply channel (K1).

5. The miller cycle engine according to claim 2, wherein a pre-turbocharger (60) driven by utilizing an exhaust gas flow from the engine (2) as the regenerative energy is provided on an upstream side of the turbocharger (20), and the additional boost pressure (ΔP) is generated by the pre-turbocharger (60) on the upstream side of the turbocharger (20).

## Patentansprüche

1. Miller-Motor, der mit einem Turbolader zum Steigern des Ladedrucks versehen und dazu eingerichtet ist, ein Einlassventil (14) zu einem Zeitpunkt früher oder später als der untere Totpunkt zu schließen, um ein Verdichtungsverhältnis geringer als ein Expansionsverhältnis zu machen, wobei der Miller-Motor (2) Folgendes umfasst:
eine Einlassventil-Verstelleinheit (36), die dazu eingerichtet ist, einen Zeitpunkt zum Öffnen oder Schließen des Einlassventils (14) zu steuern;
eine Ladedruck-Zugabevorrichtung (28, 54, 60) zum weiteren Zugeben eines zusätzlichen Ladedrucks (ΔP) zu dem von dem Turbolader (20) gesteigerten Ladedruck so, dass nur der Ladedruck gesteigert wird, ohne einen Anstieg im Abgasdruck zu bewirken, oder so, dass der Ladedruck mit Bewirken eines Anstiegs im Abgasdruck gesteigert wird, wobei der zusätzliche Ladedruck (ΔP) größer ist als der Anstieg im Abgasdruck;
**dadurch gekennzeichnet, dass** der Miller-Motor (2) des Weiteren Folgendes umfasst:
eine Ventilschließzeitpunkt-Steuereinheit (34), die dazu eingerichtet ist, den Zeitpunkt zum Schließen des Einlassventils (14) weiter vorzurücken, je höher der von der Ladedruck-Zugabevorrichtung (28, 54, 60) zugegebene zusätzliche Ladedruck (ΔP) wird, um den Ladedruck auf dem im Wesentlichen gleichen Niveau wie einen maximalen Zylinderinnendruck zu halten, bevor der zusätzliche Ladedruck (ΔP) zugegeben wird,
wobei die Ventilschließzeitpunkt-Steuereinheit (34) dazu eingerichtet ist, einen Gesamtladedruck des von dem Turbolader (20) bereitgestellten Ladedrucks und des von der Ladedruck-Zugabevorrichtung (28, 54, 60) zugegebenen zusätzlichen Ladedrucks (ΔP) mittels eines Ladedrucksensors (32) zu erfassen, und die Ventilschließzeitpunkt-Steuereinheit (34) eine Ventilschließzeitpunkt-Steuerkarte (38) besitzt, in der ein Ventilschließzeitpunkt für das Einlassventil (14) entsprechend dem von dem Ladedrucksensor (32) erfassten Ladedruck festgelegt ist, wobei
eine Beziehung zwischen dem Gesamtladedruck und einem Einlassventil-Schließzeitpunkt in der Ventilschließzeitpunkt-Steuerkarte (38) derart voreingestellt ist, dass ein Verdichtungshub entlang der Strecke eines Verdichtungshubes (M1) ausgeführt wird, bevor der zusätzliche Ladedruck angelegt wird.

2. Miller-Motor nach Anspruch 1, wobei die Ladedruck-Zugabevorrichtung (28) dazu eingerichtet ist, regenerative Energie aus dem Motor (2) zu nutzen.

3. Miller-Motor nach Anspruch 2, wobei es sich bei der regenerativen Energie um Dampf handelt, der unter Nutzung von Wärme von Abgas aus dem Motor (2) erzeugt wird, und der zusätzliche Ladedruck (ΔP) auf der stromaufwärtigen Seite des Turboladers (20) durch eine Verdichtereinheit (28a) einer von dem Dampf angetriebenen Dampfturbine (28) erzeugt wird.

4. Miller-Motor nach Anspruch 2, wobei es sich bei dem Turbolader (20) um einen Hybrid-Turbolader (52) mit einem darin integrierten Generator (50) handelt, es sich bei der regenerativen Energie um elektrische Energie handelt, die unter Nutzung des Abgases erzeugt wird, und der zusätzliche Ladedruck (ΔP) durch Antreiben, mit der elektrischen Energie, eines an einem Zuluftkanal (K1) vorgesehenen Zuluftgebläses (54) erzeugt wird.

5. Miller-Motor nach Anspruch 2, wobei ein unter Nutzung eines Abgasstroms aus dem Motor (2) als der regenerativen Energie angetriebener Vorturbolader (60) auf einer stromaufwärtigen Seite des Turboladers (20) vorgesehen ist, und der zusätzliche Ladedruck (ΔP) durch den Vorturbolader (60) auf der stromaufwärtigen Seite des Turboladers (20) erzeugt wird.

## Revendications

1. Moteur à cycle Miller qui est équipé d'un turbocompresseur pour augmenter la pression de suralimentation et est configuré pour fermer une soupape d'admission (14) à un moment antérieur ou postérieur au point mort bas pour rendre un taux de compression inférieur à un taux de détente, le moteur à cycle Miller (2) comprenant :
une unité variable de soupape d'admission (36) configurée pour régler un moment correspondant à l'ouverture ou à la fermeture de la soupape d'admission (14) ;
un dispositif d'addition de pression de suralimentation (28, 54, 60) pour ajouter également une pression de suralimentation supplémentaire (ΔP) à la pression de suralimentation augmentée par le turbocompresseur (20) de façon à augmenter uniquement la pression de suralimentation sans impliquer une augmentation de la pression d'échappement, ou de façon à augmenter la pression de suralimentation en impliquant une augmentation de la pression d'échappement, la pression de suralimentation supplémentaire (ΔP) étant supérieure à l'augmentation de la pression d'échappement;
**caractérisé en ce que** le moteur à cycle Miller (2) comprend en outre :
une unité (34) de réglage de moment de fermeture de soupape configurée pour avancer davantage le moment de fermer la soupape d'admission (14) lorsque la pression de suralimentation supplémentaire (ΔP) ajoutée par le dispositif d'addition de pression de suralimentation (28, 54, 60) devient supérieure, de façon à maintenir la pression de suralimentation essentiellement au même niveau qu'une pression de cylindres interne maximale avant l'addition de la pression de suralimentation supplémentaire (ΔP) ;
dans lequel l'unité de réglage de moment de fermeture de soupape (34) est configurée pour détecter une pression de suralimentation totale de la pression de suralimentation fournie par le turbocompresseur (20) et de la pression de suralimentation supplémentaire (ΔP) ajoutée par le dispositif d'addition de pression de suralimentation (28, 54, 60) au moyen d'un capteur de pression de suralimentation (32), et l'unité de réglage de moment de fermeture de soupape (34) possède une carte de réglage de moment de fermeture de soupape (38), dans laquelle un moment de fermeture de soupape pour la soupape d'admission (14) est établi en fonction de la pression de suralimentation détectée par le capteur de pression de suralimentation (32) ;
dans lequel une relation entre la pression de suralimentation totale et un moment de fermeture de soupape d'admission est préétablie dans la carte de réglage de moment de fermeture de soupape (38), d'une manière telle que la course de compression est mise en oeuvre le long de la ligne d'une course de compression (M1) avant l'application de la pression de suralimentation supplémentaire.

2. Moteur à cycle Miller selon la revendication 1, dans lequel le dispositif d'addition de pression de suralimentation (28) est configuré pour utiliser une énergie de récupération à partir du moteur (2).

3. Moteur à cycle Miller selon la revendication 2, dans lequel l'énergie de récupération est de la vapeur qui est générée en utilisant la chaleur des gaz d'échappement du moteur (2), et la pression de suralimentation supplémentaire (ΔP) est générée du côté amont du turbocompresseur (20) par une unité de compresseur (28a) d'une turbine à vapeur (28) entraînée par la vapeur.

4. Moteur à cycle Miller selon la revendication 2, dans lequel le turbocompresseur (20) est un turbocompresseur hybride (52) dans lequel est incorporée un générateur (50), l'énergie de récupération est du courant électrique généré en utilisant les gaz d'échappement, et la pression de suralimentation supplémentaire (ΔP) est générée en entraînant, avec le courant électrique, une soufflante d'air d'alimentation (54) prévue sur un canal d'alimentation d'air (K1).

5. Moteur à cycle Miller selon la revendication 2, dans lequel un préturbocompresseur (60) entraîné en utilisant un courant de gaz échappement du moteur (2) à titre d'énergie de récupération est prévu sur le côté amont du turbocompresseur (20), et la pression de suralimentation supplémentaire (ΔP) est générée par le préturbocompresseur (60) du côté amont du turbocompresseur (20).
